# FASCICULE DE BREVET EUROPEEN

(11) **EP 0 841 740 B1**
(45) Date de publication et mention de la délivrance du brevet: **13.03.2002**
(21) Numéro de dépôt: 97202570.4
(22) Date de dépôt: 29.10.1997
(51) Int. Cl.: H02M 3/157, H02M 3/156

(54) **Signal de commande d'un générateur de tension d'un circuit de réglage d'un écran LCD**
Steuerungssignal für einen Spannungsgenerator einer Regelungsschaltung einer Flüssigkristallanzeigeeinheit
Control signal for a voltage generator used for a LCD-display control circuit

(30) Priorité: 06.11.1996 FR 9613534
(43) Date de publication de la demande: 13.05.1998
(73) Titulaire: Koninklijke Philips Electronics N.V., 5621 BA Eindhoven (NL)
(72) Inventeur: Ryon, David, 75008 Paris (FR); Boursier Alain, 75008 Paris (FR); Norman, Paul, 75008 Paris (FR); Dauvillier, Richard, 75008 Paris (FR)
(74) Mandataire: Chaffraix, Jean

(56) Documents cités:
- DE-A- 3 208 449
- DE-A- 3 541 307
- DE-A- 4 422 399
- US-A- 5 349 523
- PATENT ABSTRACTS OF JAPAN vol. 16, no. 263 (E-1216), 15 juin 1992 & JP 04 058760 A (MATSUSHITA ELECTRIC WORKS)
- PATENT ABSTRACTS OF JAPAN vol. 17, no. 498 (P-1609), 8 septembre 1993 & JP 05 127609 A (ALPS ELECTRIC), 25 mai 1993,
- PATENT ABSTRACTS OF JAPAN vol. 96, no. 8, 30 août 1996 & JP 08 095002 A (JAPAN RADIO), 12 avril 1996,

## Description

La présente invention concerne un circuit de réglage du contraste d'un écran à cristaux liquides comportant un générateur de tension pour fournir une tension d'alimentation audit écran en réponse à un signal de commande.

Elle concerne également un équipement comportant un écran à cristaux liquides et un tel circuit de réglage de contraste de l'écran à cristaux liquides.

L'invention a notamment des applications dans le domaine de la téléphonie, pour des équipements téléphoniques dotés d'écran à cristaux liquides, par exemple pour des téléphones à écran, des téléphones mobiles...

L'abrégé de brevet japonais n°08095002 publié le 12.04.1996 décrit un circuit de réglage du contraste d'un écran à cristaux liquides par variation de la tension d'alimentation dudit écran. Dans ce document, la tension d'alimentation de l'écran varie en fonction de l'utilisateur, et en fonction du temps afin de compenser l'augmentation de température lors du démarrage d'une voiture en hiver.

Ce document ne décrit pas le mode de production de la tension d'alimentation de l'écran. L'invention a notamment pour but de proposer un circuit de réglage du contraste d'un écran à cristaux liquides qui permette d'obtenir une variation très précise de la tension d'alimentation dudit écran.

Ce but est atteint avec un circuit de réglage tel que revendiqué dans la revendication 1 de la présente demande.

En complexifiant le signal de commande du générateur de tension, l'invention permet d'obtenir une variation très précise de la tension délivrée par ce générateur, tout en utilisant un montage électronique très simple. L'invention est donc particulièrement peu coûteuse à mettre en oeuvre ce qui est primordial dans le domaine des équipements grand public, par exemple des équipements téléphoniques.

Il est à noter que le brevet américain n° 5,272,614 déposé par la demanderesse le 2 juillet 1992 décrit un générateur de tension qui comporte un convertisseur continu - continu commandé par un microprocesseur. Le signal de commande fourni par ce microprocesseur est un signal à impulsions modulées en largeur de telle sorte que la tension de sortie du convertisseur varie avec le rapport cyclique du signal de commande. Toutefois la tension de sortie d'un tel générateur ne varie pas suffisamment finement pour régler le contraste d'un écran à cristaux liquides.

Par ailleurs l'abrégé japonais n°04058760 publié le 25.02.1992 décrit un générateur de tension connecté à une charge, et commandé par un signal de commande qui comporte au moins une partie active et une partie inactive, la partie active comportant un nombre d'impulsions variable. Le nombre d'impulsions dans une partie active du signal de commande est modifié en fonction des fluctuations de la charge, de façon à maintenir une tension constante aux bornes de la charge, quelles que soient les fluctuations de la charge.

Le contraste des écrans à cristaux liquides varie avec la température: à très basse température le cristal a tendance à être opaque, tandis qu'à très haute température il a tendance à être transparent. Ainsi, la tension d'alimentation de l'écran doit être ajustée en fonction des variations de température de façon à maintenir un contraste à peu près constant.

Un autre but de l'invention est de proposer un circuit de réglage du contraste d'un écran à cristaux liquides en fonction d'une part de l'utilisateur, et d'autre part des variations de températures. Ce but est atteint avec le circuit de réglage tel que revendiqué dans la revendication 2 de la présente demande.

La tension d'alimentation de l'écran est ainsi ajustée à partir d'une valeur de référence pour tenir compte des modifications de réglage apportées par l'utilisateur et des variations de température.

L'invention sera mieux comprise et d'autres détails apparaîtront à la lumière de la description qui va suivre en regard des dessins annexés qui sont donnés à titre d'exemple non limitatif et dans lesquels:
- La figure 1 représente un schéma de principe d'un générateur de tension selon l'invention,
- la figure 2 représente un exemple de réalisation d'un générateur de tension selon l'invention,
- la figure 3 représente un signal de commande selon l'art antérieur,
- la figure 4 représente un signal de commande selon l'invention, destiné notamment à commander le générateur de tension de la figure 2,
- la figure 5 est une représentation graphique de la tension obtenue en sortie du générateur de tension avec les signaux de commande selon l'invention et selon l'art antérieur,
- la figure 6 représente un circuit de réglage du contraste d'un écran à cristaux liquides selon l'invention,
- la figure 7 représente un schéma synoptique de la programmation d'un circuit programmable utilisé dans le circuit de réglage de la figure 6,
- la figure 8 représente un exemple d'équipement électronique selon l'invention.

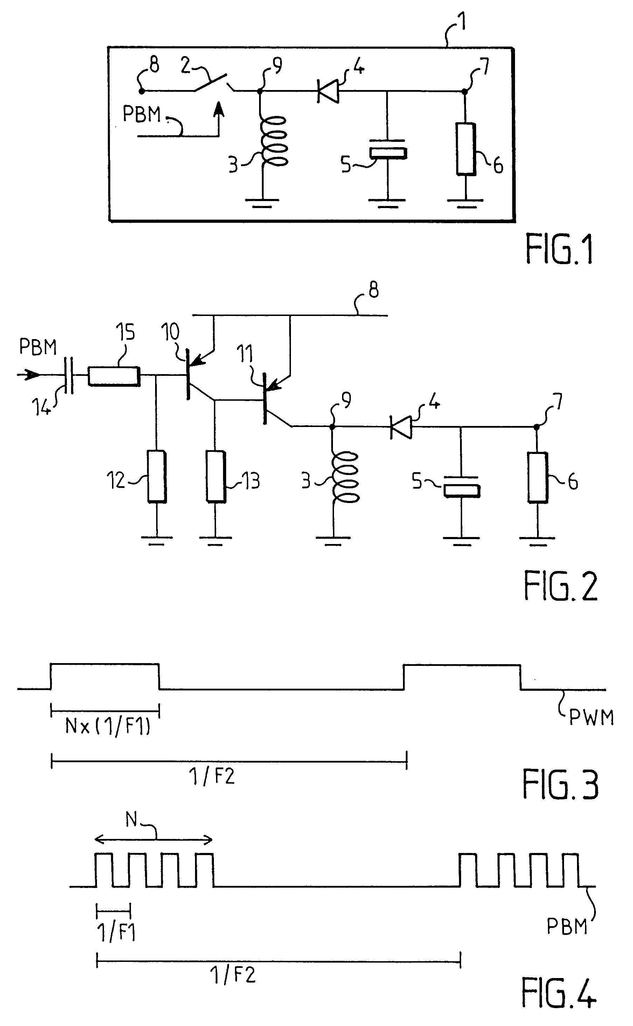

Sur la figure 1 on a représenté à titre d'exemple un schéma de principe d'un générateur de tension 1 selon l'invention. Il comporte un interrupteur 2, une bobine 3, une diode 4, un condensateur 5 et une résistance 6. La condensateur 5 et la résistance 6 sont montés en parallèle entre la masse et la sortie 7 du générateur. L'interrupteur 2 est connecté entre un noeud 8 qui constitue une référence de tension, et un noeud 9. Ce noeud 9 est connecté d'une part à la sortie 7 du générateur par l'intermédiaire de la diode 4 connectée en inverse, et d'autre part à l'une des bornes de la bobine 3. L'autre borne de la bobine 3 est reliée à la masse. L'interrupteur est commandé par un signal de commande PBM.

Ainsi, lorsque l'interrupteur 2 est ouvert, la tension prélevée aux bornes de la bobine 3 permet de charger le condensateur 5. Et lorsque l'interrupteur 2 est fermé, le condensateur 5 se décharge dans la résistance 6. La tension obtenue en sortie du générateur varie donc avec le signal de commande PBM.

Sur la figure 2 on représenté un exemple de réalisation d'un tel générateur. Dans cet exemple, l'interrupteur 2 est constitué par un premier transistor PNP 11 dont l'émetteur est relié au noeud 8 et dont le collecteur est relié au noeud 9. Ce transistor 11 est protégé par un second transistor PNP 10 dont l'émetteur est relié au noeud 8 et dont le collecteur est relié à la base du transistor 11. Les bases des transistors 10 et 11 sont de plus respectivement reliées à la masse par l'intermédiaire d'une résistance 12 et d'une résistance 13. Le signal de commande PBM est appliqué sur la base du premier transistor 10 par l'intermédiaire d'un condensateur 14 et d'une résistance 15.

A titre d'exemple, les résistances 6, 12, 13 et 15 ont respectivement pour valeur R₆=6.2kΩ, R₁₂=100kΩ, R₁₃=4.7kΩ et R₁₅=10kΩ. Les condensateurs 5 et 14 ont respectivement une capacité C₅=47µF et C₁₄=470µF. La bobine 3 a une inductance L₃=100µH. La diode 4 est une diode BAT54, et les transistors 10 et 11 sont respectivement des transistors BC858 et BC807. La tension de référence disponible au noeud 8 est de 5V, et la tension de sortie Vout du générateur de tension varie entre 0 et -22V selon le signal de commande PBM appliqué.

Sur la figure 3, on a représenté un signal de commande PWM selon l'art antérieur. Ce signal est un signal à impulsions modulées en largeur. C'est donc la variation du rapport cyclique de ce signal qui permet d'obtenir la tension de sortie Vout recherchée: ce signal de commande comporte donc une partie active plus ou moins longue (de N durées élémentaires 1/F1) suivie une partie inactive complémentaire.

Sur la figure 4, on a représenté un signal de commande PBM selon l'invention. Ce signal comporte une partie active qui contient un nombre variable N d'impulsions de fréquence F1 et une partie inactive complémentaire. Le nombre d'impulsions contenues dans la partie active du signal de commande selon l'invention détermine la tension de sortie Vout du générateur de tension. Ainsi, la fréquence de modulation de ce signal de commande PBM est égale à F2=1/[Nmax.(1/F1)] où Nmax est le nombre maximum d'impulsions contenues dans le signal.

Dans la suite de la description le signal PBM utilisé est constitué de N impulsions de rapport cyclique 50% et de fréquence F1=200kHz, N variant de 0 à 255, de telle sorte que la fréquence de modulation du signal de commande est égale à F2=785Hz.

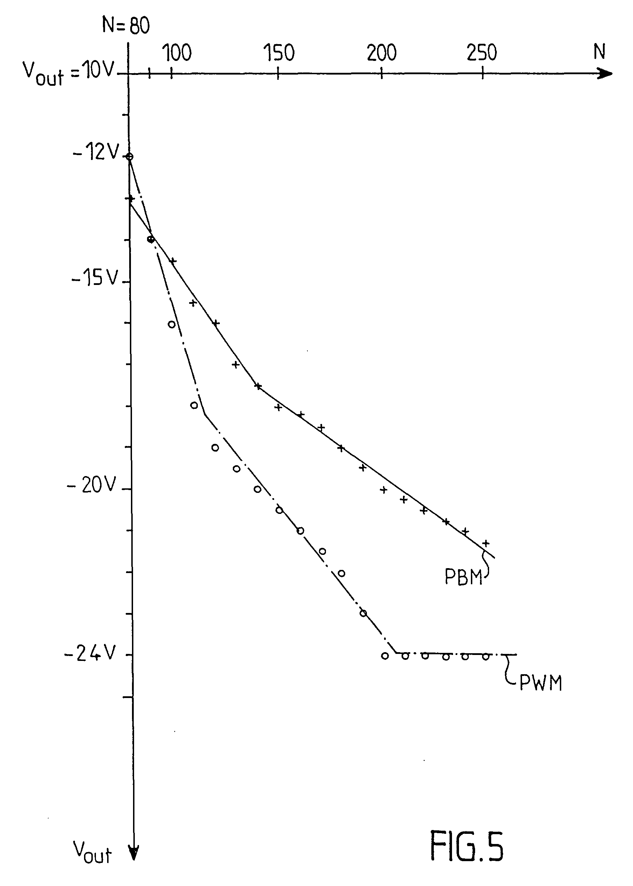

Le tableau I indique la tension Vout obtenue en sortie du générateur en fonction du nombre N pour chacun des signaux de commande PBM et PWM. Ces résultats sont présentés sur la figure 5 sous forme graphique.

On constate qu'avec le signal de commande PWM selon l'art antérieur la tension Vout ne varie pas régulièrement en fonction de N, et sature très rapidement. Ce signal de commande PWM ne permet notamment pas d'obtenir une variation fine autour de la valeur de référence de la tension d'alimentation de l'écran à cristaux liquides (selon l'écran utilisé cette valeur de référence varie entre -16V et -21V). Le signal de commande PBM selon l'invention permet en revanche d'obtenir une variation très fine de la tension d'alimentation d'un écran sur toute la plage -16V à -21V.

**TABLEAU I**

| N | Vout (PBM) | Vout (PWM) |
|---|---|---|
| 80 | -13V | -12V |
| 90 | -14V | -14V |
| 100 | -14,5V | -16V |
| 110 | -15,5V | -18V |
| 120 | -16V | -19V |
| 130 | -17V | -19,5V |
| 140 | -17,5V | -20V |
| 150 | -18V | -20,5V |
| 160 | -18,2V | -21V |
| 170 | -18,5V | -21,5V |
| 180 | -19V | -22V |
| 190 | -19,5V | -23V |
| 200 | -20V | -24V |
| 210 | -20,2V | -24V |
| 220 | -20,5V | -24V |
| 230 | -20,7V | -24V |
| 240 | -21V | -24V |
| 250 | -21,3V | -24V |

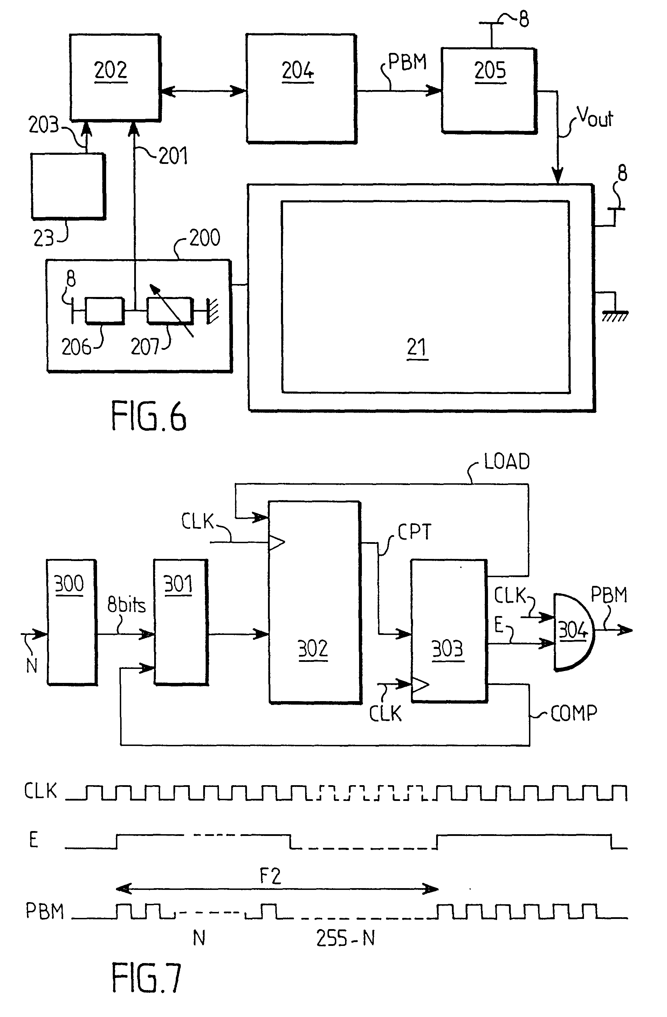

Sur la figure 6 on a représenté un circuit de réglage du contraste d'un écran à cristaux liquides 21. Ce circuit de réglage comporte un capteur thermique 200 connecté à l'écran 21 d'une part et à une première entrée 201 d'un processeur 202 d'autre part. Le capteur thermique 200 fournit au processeur 202 une tension analogique représentative de la température au niveau de l'écran 21. Le processeur 202 comporte des moyens de conversion analogique-numérique qui permettent notamment de fournir, à partir de cette tension analogique, une première grandeur numérique T° représentative de la température.

Le processeur 202 est doté d'une seconde entrée 203 sur laquelle il reçoit une seconde grandeur numérique δN1 qui indique la variation de contraste demandée par l'utilisateur de l'équipement à partir d'une touche de réglage numérique 23 disponible sur le clavier de l'appareil.

Ainsi, la tension de l'alimentation de l'écran est modifiée automatiquement pour maintenir un contraste constant quelque soient les variations de température, et elle est susceptible d'être modifiée à la demande de l'utilisateur lorsque ce dernier souhaite modifier le contraste.

Pour cela, le processeur 202 comporte une table de correspondance qui donne un nombre d'impulsions δN2 du signal de commande PBM qui correspond à la grandeur numérique T°. Le processeur 202 comporte également des moyens de combinaison des deux grandeurs numériques δN1 et δN2 (par exemple des moyens d'addition) pour former une grandeur globale δN.

Le tableau II reproduit à titre d'exemple une telle table de correspondance.

**TABLEAU II**

| Température T° | δN2 | | Température T° | δN2 |
|---|---|---|---|---|
| 0 | 0 | | 26 | -1 |
| 1 | 0 | | 27 | 0 |
| 2 | 0 | | 28 | -1 |
| 3 | 0 | | 29 | -1 |
| 4 | 0 | | 30 | 0 |
| 5 | 0 | | 31 | -1 |
| 6 | 0 | | 32 | -1 |
| 7 | -1 | | 33 | 0 |
| 8 | 0 | | 34 | -1 |
| 9 | 0 | | 35 | -1 |
| 10 | 0 | | 36 | 0 |
| 11 | 0 | | 37 | -1 |
| 12 | 0 | | 38 | -1 |
| 13 | 0 | | 39 | -1 |
| 14 | 0 | | 40 | 0 |
| 15 | 0 | | 41 | -1 |
| 16 | 0 | | 42 | -1 |
| 17 | 0 | | 43 | 0 |
| 18 | 0 | | 44 | -1 |
| 19 | -1 | | 45 | -1 |
| 20 | 0 | | 46 | 0 |
| 21 | 0 | | 47 | -1 |
| 22 | 0 | | 48 | -1 |
| 23 | 0 | | 49 | 0 |
| 24 | 0 | | 50 | -1 |
| 25 | 0 | | | |

La valeur de N, délivrée en sortie du processeur 202, est fournie à un circuit programmable 204. Ce circuit délivre le signal de commande PBM qui est appliqué à un générateur de tension selon l'invention 205. La tension de sortie Vout de ce générateur de tension constitue la tension d'alimentation de l'écran à cristaux liquides 21.

A titre d'exemple, le capteur thermique 200 est constitué par un pont diviseur de tension, connecté entre la masse et une référence de tension de 5V, qui comporte une résistance 206 de 10kΩ et une résistance 207 à coefficient de température négatif CTN 10kΩ. C'est la tension prélevée au borne de cette résistance 207 qui est fournie à la première entrée du processeur 202.

Le processeur 202 est par exemple un processeur HITACHI H8 comportant un convertisseur analogique-numérique. Et le circuit programmable 204 est par exemple un circuit FPGA (de l'anglais Field Programmable Gate Array) commercialisé sous la référence ACT1240XL par la société ACTEL.

Sur la figure 7, on a représenté un schéma synoptique de la réalisation de ce circuit ACT1240XL. Il comporte:
- un registre 300 destiné à être chargé avec la valeur de N, sur 8 bits,
- un bloc de 8 portes "OU EXCLUSIF" 301 dont une première entrée est reliée à la sortie du registre 300,
- un compteur 8 bits 302 dont une première entrée est reliée à la sortie de la porte 301,
- une cellule logique de commande 303 qui reçoit en entrée un signal de fin de comptage CPT fourni par le compteur 302 et qui délivre une enveloppe E du signal de commande PBM sur une première sortie, un signal COMP de complément sur une seconde sortie, et un signal LOAD de chargement du compteur sur une troisième sortie. Le signal de complément COMP est fourni sur une seconde entrée de la porte 301: ainsi, la valeur chargée dans le compteur 302 est égale à N ou à son complément à 255 selon l'état du signal COMP. Le signal LOAD de chargement du compteur est fourni sur une seconde entrée du compteur 302. Il permet, lorsqu'il est actif, de charger la valeur fournie par la porte 301 dans le compteur 302.
- une porte logique "ET" 304 qui reçoit sur une première entrée le signal E fournie par la cellule 303 et sur une seconde entrée un signal d'horloge CLK dont la fréquence F1 est égale à la fréquence des impulsions du signal de commande. Le signal de commande est délivré sur la sortie de cette porte logique 304.

Ce circuit fonctionne de la façon suivante: au démarrage, on charge dans le registre 300 la valeur N qui correspond au nombre d'impulsions que l'on cherche à obtenir pour le signal de commande PBM. Le compteur 302 est tout d'abord chargé avec cette valeur N (le signal COMP est dans un état inactif). Le compteur 302 compte N impulsions pendant lesquelles la cellule de commande 303 délivre un signal d'enveloppe E à l'état actif. La sortie de la porte 304 est donc active et recopie le signal d'horloge CLK.
Lorsque le compteur 302 atteint la valeur N, le signal de fin de comptage CPT passe à l'état actif ainsi que le signal de complément COMP délivré par la cellule 303. Le signal d'enveloppe E passe à l'état inactif. La valeur 255-N est donc chargée dans le compteur 302. Le compteur 302 compte donc 255-N impulsions pendant que le signal d'enveloppe est à l'état inactif. La sortie de la porte 304 est donc inactive de même que le signal de commande PBM. On obtient ainsi un signal de N impulsions dont la fréquence de modulation est égale à F2=F1/255.

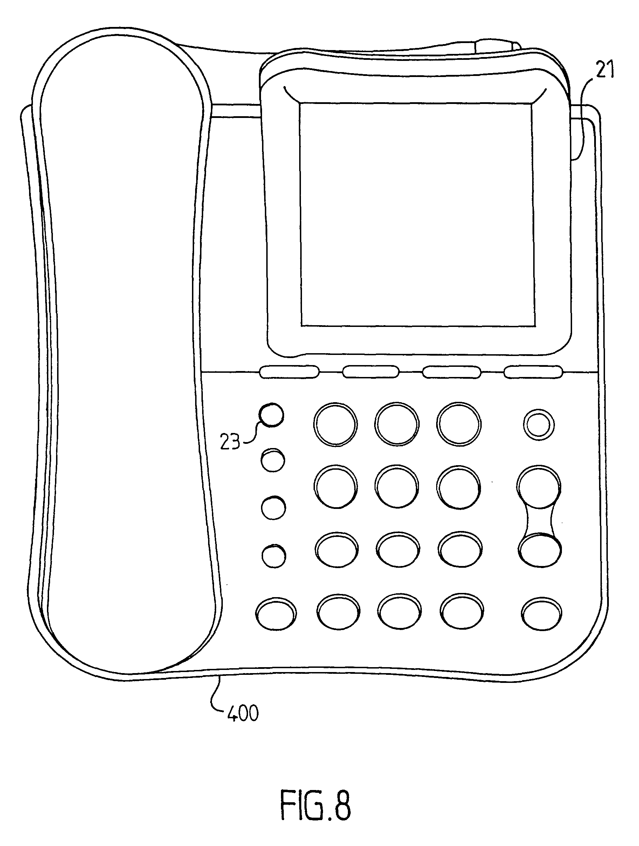

Sur la figure 8 on a représenté un exemple d'équipement électronique 400 selon l'invention. Cet équipement est un téléphone à écran qui comporte notamment un écran à cristaux liquides 21 du type STN, un clavier 23 et un circuit 20 de réglage de contraste. Le clavier 23 comporte notamment une touche de réglage numérique du contraste de l'écran.

Les valeurs numériques qui ont été données dans la description ont été obtenues avec un écran cristaux liquides fabriqué par la société SHARP. Toutefois le principe de l'invention est adaptable à d'autres types d'écrans sous réserve de modifications éventuelles notamment des composants utilisés et des caractéristiques du signal de commande (choix de la valeur maximum du nombre N d'impulsions, de la fréquence de modulation du signal de commande, de la fréquence des impulsions...)

## Revendications

1. Circuit de réglage du contraste d'un écran à cristaux liquides (21) comportant un générateur de tension (1) pour fournir une tension d'alimentation (Vout) audit écran en réponse à un signal de commande (PBM), **caractérisé en ce qu**'il comprend des moyens de production d'un signal de commande (PBM) comportant au moins une partie active et une partie inactive, ladite partie active comportant un nombre variable d'impulsions (N) qui détermine la valeur de la tension d'alimentation.

2. Circuit de réglage du contraste d'un écran à cristaux liquide selon la revendication 1, **caractérisé en ce qu'**il comporte :
- des moyens de mesure de température (200),
- des moyens (202) pour fournir une première correction (δN2) à apporter à la tension d'alimentation à partir de ladite mesure de température (201),
- des moyens de réglage de contraste par l'utilisateur (23) pour fournir une seconde correction (203, δN1) à apporter à ladite tension d'alimentation en fonction dudit réglage,
- des moyens (202, 204) de production d'un signal de commande (PBM) à partir desdites première et seconde corrections.

3. Circuit de réglage selon la revendication 2, **caractérisé en ce que** les moyens (202) pour fournir la première correction comportent une table de correspondance donnant une première correction (δN2) à partir d'une grandeur numérique (T°) représentative de ladite mesure de température (201).

4. Equipement électronique (400) comportant un écran à cristaux liquides (21) et un circuit de réglage du contraste dudit écran selon l'une des revendications 1 à 3.

## Patentansprüche

1. Schaltung für die Regelung des Kontrastes einer Flüssigkristallanzeigeeinheit (21) mit einem Spannungsgenerator (1), um als Reaktion auf ein Steuerungssignal (PBM) eine Versorgungsspannung (Vout) an die besagte Anzeigeeinheit zu liefern, **dadurch gekennzeichnet, daß** sie Verfahren zur Erzeugung eines Steuersignals (PBM) enthält, mit mindestens einem aktiven Teil und einem passiven Teil, wobei der besagte aktive Teil eine variable Impulsreihe (N) aufweist, die den Wert der Versorgungsspannung bestimmt.

2. Schaltung für die Regelung des Kontrastes einer Flüssigkristallanzeigeeinheit nach Anspruch 1, **dadurch gekennzeichnet, daß** sie enthält:
- Verfahren zur Temperaturmessung (200),
- Verfahren (202), um eine erste Korrektur (δN2) zu liefern, die ausgehend von der besagten Temperaturmessung (201) an der Versorgungsspannung vorzunehmen ist,
- Verfahren zur Regelung des Kontrastes durch den Anwender (23), um eine zweite Korrektur (203, δN1) zu liefern, die ausgehend von der besagten Regelung an der Versorgungsspannung vorzunehmen ist,
- Verfahren (202, 204) zur Erzeugung eines Steuersignals (PBM) ausgehend von den ersten und zweiten Korrekturen.

3. Regelungsschaltung nach Anspruch 2, **dadurch gekennzeichnet, daß** die Verfahren (202) zum Liefern einer ersten Korrektur eine Entsprechungstabelle enthalten, um eine erste Korrektur (δN2) zu geben, ausgehend von einer für die besagte Temperaturmessung repräsentativen digitalen Größe (T°).

4. Elektronische Ausrüstung (400) mit einer Flüssigkristallanzeigeeinheit (21) und einer Schaltung für die Regelung des Kontrastes des besagten Bildschirmes nach einem der Ansprüche 1 bis 3.

## Claims

1. A circuit for controlling the contrast of a liquid crystal display screen (21), comprising a voltage generator (1) for supplying a power supply voltage (Vout) to said screen in response to a control signal (PBM), **characterized in that** it comprises means for producing a control signal (PBM) comprising at least an active part and an inactive part, said active part comprising a variable number of pulses (N) which determines the value of the power supply voltage.

2. A circuit for controlling the contrast of a liquid crystal display screen as claimed in claim 1, **characterized in that** it comprises:
- temperature-measuring means (200),
- means (202) for providing a first correction (δN2) of the power supply voltage on the basis of said temperature measurement (201),
- means for controlling the contrast by the user (23) for providing a second correction (203, δN1) of the power supply voltage as a function of said control,
- means (202,204) for producing a control signal (PBM) on the basis of said first and second corrections.

3. A control circuit as claimed in claim 2, **characterized in that** the means (202) for providing the first correction comprise a correspondence table giving a first correction (δN2) on the basis of a numerical value (T°) which is representative of said temperature measurement (201).

4. An electronic device (400) comprising a liquid crystal display screen (21) and a circuit for controlling the contrast of said screen as claimed in any one of claims 1 to 3.
